# EUROPEAN PATENT APPLICATION

(11) **EP 4 838 568 A1**
(43) Date of publication of application: **11.11.2026**
(21) Application number: 24921621.9
(22) Date of filing: 11.11.2024
(51) Int. Cl.: H01M 4/131, H01M 4/1391, H01M 10/0525

(54) **POSITIVE ELECTRODE SHEET AND PREPARATION METHOD THEREFOR, BATTERY AND VEHICLE**

(30) Priority: 04.02.2024 CN 202410157406
(71) Applicant: Zhejiang Geely Holding Group Co., Ltd., Hangzhou, Zhejiang 310051 (CN); VIRIDI E-MOBILITY TECHNOLOGY (NINGBO) CO., LTD., Ningbo, Zhejiang 315336 (CN); ZHEJIANG ZEEKR INTELLIGENT TECHNOLOGY CO., LTD., Ningbo, Zhejiang 315899 (CN)
(72) Inventor: GONG, Yan, Hangzhou, Zhejiang 310051 (CN); DU, Peng, Hangzhou, Zhejiang 310051 (CN); PAN, Fuzhong, Hangzhou, Zhejiang 310051 (CN)
(74) Representative: Range, Christopher William
(86) International application number: PCT/CN2024/131360
(87) International publication number: WO 2025/161599

(57) **Abstract**

A positive electrode plate (100) and a preparation method thereof, a battery, and a vehicle. The positive electrode plate (100) includes a current collector (11), a first positive electrode active material layer (12), and a second positive electrode active material layer (13). The first positive electrode active material layer (12) is disposed on at least one side of the current collector (11). The first positive electrode active material layer (12) includes a first positive electrode active material. The first positive electrode active material includes LiNiₓCo_{y}Mn_{1-x-y}O₂, where 0.6≤x≤0.95, 0.03≤y≤0.1, and 0<x+y<1. The second positive electrode active material layer (13) is disposed on a side of the first positive electrode active material layer (12) away from the current collector (11). The second positive electrode active material layer (13) includes a second positive electrode active material.

## Description

### CROSS-REFERENCE TO RELATED APPLICATION

This application is based on and claims priority to Chinese patent application No. 202410157406.4, filed on February 4, 2024, the entire contents of which are incorporated herein by reference.

### FIELD

The present disclosure relates to, but is not limited to, the technical field of batteries, and specifically relates to a positive electrode plate and a preparation method thereof, a battery, and a vehicle.

### BACKGROUND

With the continuous expansion of the market for new energy vehicles, the installed capacity of lithium-ion batteries has increased year by year, thereby imposing higher requirements on lithium-ion batteries, such as higher energy density, faster charging speed, and longer cycle life.

Ternary positive electrode materials (LiNiₓCo_{y}Mn_{1-x-y}O₂, where 0<x and y<1; referred to as NCM) have high energy density and have been widely used in power batteries for new energy vehicles. However, compared with another mainstream positive electrode material currently available on the market, lithium iron phosphate (LiFePO₄), the cycle life of NCM still requires improvement. The causes of cycle failure at the positive electrode side of NCM lithium-ion batteries include transition of the internal structure of the NCM material under deep delithiation conditions, side reactions occurring on the surface of NCM particles, and decomposition of the electrolyte caused by oxygen generation under high voltage.

Currently, mainstream improvement methods all directed to the intrinsic level of the NCM material, and the structural stability and interfacial stability of the NCM material are improved by means such as doping and coating. However, the fundamental causes of the improvement are difficult to investigate clearly, and there are also problems such as high material cost and poor consistency.

At the electrode plate level, voltages at different positions inside the electrode are different. Such a phenomenon has received particular attention in negative electrode plates when considering lithium plating issues. In fact, during charging and discharging of lithium-ion batteries, the positive electrode plate side also has the issue that voltages at different positions are different. In practice, the detected voltage is the voltage on the current collector side rather than the voltage on the side of the positive electrode plate close to the separator. However, after long-term cycling of the positive electrode plate, the voltage difference between two sides of the positive electrode plate may increase to 100 mV to 150 mV, which causes the positive electrode material close to the separator side to withstand a higher voltage. As a result, failure behavior preferentially occurs in the positive electrode active material close to the separator side, thereby affecting the cycling performance of the lithium-ion battery.

### SUMMARY

The following is an overview of the subject matter described in detail herein. This overview is not intended to limit the scope of protection of the claims.

An objective of the present disclosure is to provide a positive electrode plate. The positive electrode plate of the present disclosure has satisfactory high-voltage resistance performance and can improve the cycling performance of a battery.

Another objective of the present disclosure is to provide a method for preparing the positive electrode plate.

Yet another objective of the present disclosure is to provide a battery.

Still yet another objective of the present disclosure is to provide a vehicle.

In a first aspect of the present disclosure, the present disclosure provides a positive electrode plate. According to an embodiment of the present disclosure, the positive electrode plate includes a current collector, a first positive electrode active material layer, and a second positive electrode active material layer. The first positive electrode active material layer is disposed on at least one side of the current collector. The first positive electrode active material layer includes a first positive electrode active material. The first positive electrode active material includes LiNiₓCo_{y}Mn_{1-x-y}O₂, where 0.6≤x≤0.95, 0.03≤y≤0.1, and 0<x+y<1. The second positive electrode active material layer is disposed on a side of the first positive electrode active material layer away from the current collector. The second positive electrode active material layer includes a second positive electrode active material. An electrochemical potential window of the second positive electrode active material is greater than an electrochemical potential window of the first positive electrode active material.

According to the above embodiment of the present disclosure, the positive electrode plate includes the current collector, the first positive electrode active material layer, and the second positive electrode active material layer. The first positive electrode active material layer and the second positive electrode active material layer are sequentially formed on the current collector. That is, the first positive electrode active material layer is located between the current collector and the second positive electrode active material layer. In addition, the electrochemical potential window of the second positive electrode active material in the second positive electrode active material layer is greater than the electrochemical potential window of the first positive electrode active material in the first positive electrode active material layer. As a result, the high-voltage resistance performance of the second positive electrode active material layer is better than that of the first positive electrode active material layer, which can improve the high-voltage resistance performance of the positive electrode plate, and is conducive to suppressing transition of the internal structure of the second positive electrode active material. Further, the arrangement of the second positive electrode active material layer can also protect the first positive electrode active material, thereby reducing structural damage thereto caused by high voltage and improving the cycling performance of the battery. In addition, the first positive electrode active material includes LiNiₓCo_{y}Mn_{1-x-y}O₂, where 0.6≤x≤0.95, 0.03≤y≤0.1, and 0<x+y<1. The material contains a plurality of active substances (such as Ni, Co, and Mn), and exhibits satisfactory chemical stability during charging and discharging of the battery, which can effectively improve the cycling performance of the battery. That is, by using, in the first positive electrode active material layer, the first positive electrode active material satisfying the above chemical formula, high cycling performance of the battery can be maintained. Accordingly, the positive electrode plate of the present disclosure has satisfactory high-voltage resistance performance and can improve the cycling performance of the battery.

In a second aspect of the present disclosure, the present disclosure provides a method for preparing the above positive electrode plate. According to an embodiment of the present disclosure, the method includes: forming a first positive electrode active material layer including a first positive electrode active material on at least one side of a current collector; and forming a second positive electrode active material layer including a second positive electrode active material on a side of the first positive electrode active material layer away from the current collector, to obtain the positive electrode plate.

According to the method for preparing the above positive electrode plate in the above embodiments of the present disclosure, the first positive electrode active material layer including the first positive electrode active material is formed on at least one side of the current collector, which can improve the cycling performance of the battery. The second positive electrode active material layer including the second positive electrode active material is formed on the first positive electrode active material layer, that is, the first positive electrode active material layer is located between the current collector and the second positive electrode active material layer. In addition, the electrochemical potential window of the second positive electrode active material is greater than the electrochemical potential window of the first positive electrode active material. As a result, the high-voltage resistance performance of the second positive electrode active material layer is better than that of the first positive electrode active material layer. During charge-discharge cycling, the voltage difference between the separator side and the current collector side of the positive electrode plate can be reduced, thereby suppressing transition of the internal structure of the positive electrode active material and improving the cycling performance of the battery.

In a third aspect of the present disclosure, the present disclosure provides a battery. According to an embodiment of the present disclosure, the battery includes the above positive electrode plate or the positive electrode plate prepared by the above method.

According to the above embodiment of the present disclosure, the battery has satisfactory comprehensive performance and can exhibit satisfactory cycling performance.

In a fourth aspect of the present disclosure, the present disclosure provides a vehicle. According to an embodiment of the present disclosure, the vehicle includes the above battery.

According to the above embodiment of the present disclosure, the vehicle has good stability and high market satisfaction.

Additional aspects and advantages of the present disclosure will be provided at least in part in the following description, or will become apparent at least in part from the following description, or can be learned from practicing of the present disclosure.

Other aspects can be understood after reading and understanding the accompanying drawings and the detailed description.

### BRIEF DESCRIPTION OF THE DRAWINGS

FIG. 1 illustrates a schematic structural diagram of a positive electrode plate according to an embodiment of the present disclosure.
FIG. 2 illustrates a schematic flowchart of preparation of a positive electrode plate according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

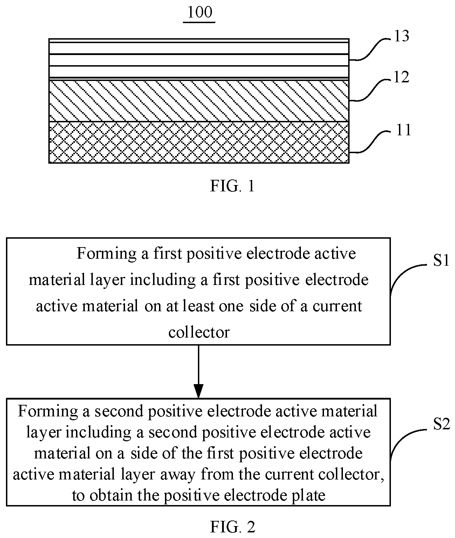

In a first aspect of the present disclosure, the present disclosure provides a positive electrode plate 100. According to an embodiment of the present disclosure, referring to FIG. 1, the positive electrode plate 100 includes a current collector 11, a first positive electrode active material layer 12, and a second positive electrode active material layer 13.

The current collector 11 serves as a carrier for the positive electrode active material, and is capable of carrying and supporting the positive electrode active material while ensuring stability during charging and discharging of a battery. As an example, the current collector 11 includes, but is not limited to, at least one of a pure aluminum foil and a composite aluminum foil.

According to an embodiment of the present disclosure, referring to FIG. 1, the first positive electrode active material layer 12 is disposed on at least one side of the current collector 11. The first positive electrode active material layer 12 includes a first positive electrode active material. The first positive electrode active material includes LiNiₓCo_{y}Mn_{1-x-y}O₂, where 0.6≤x≤0.95, 0.03≤y≤0.1, and 0<x+y<1. For example, x may be 0.6, 0.65, 0.7, 0.75, 0.8, 0.85, 0.9, or 0.95, and y may be 0.03, 0.05, 0.08, or 0.1. By limiting the content of element nickel within the above range, the discharge specific capacity of the first positive electrode active material can be improved, thereby improving the cycling performance of the lithium battery. By limiting the content of element cobalt within the above range, formation of a layered structure of the first positive electrode active material is facilitated, and Li/Ni mixing in the first positive electrode active material is suppressed, thereby optimizing the electrochemical performance of the first positive electrode active material. By limiting the content of element manganese within the above range, the structure of the first positive electrode active material can be stabilized, thereby improving the stability of the first positive electrode active material. Accordingly, by using, in the first positive electrode active material layer 12, the first positive electrode active material satisfying the above chemical formula, the cycling stability of the battery can be further improved.

According to some specific embodiments of the present disclosure, the first positive electrode active material includes at least one of material A, material B, or material C. Material A is a single-crystal material represented by a chemical formula of LiNiₓ₁Co_{y1}Mn_{1-x1-y1}O₂, where 0.6≤x1<0.8, 0.03≤y1≤0.1, and 0<x1+y1<1. For example, x1 may be 0.6, 0.65, 0.7, 0.75, or 0.78, and y1 may be 0.03, 0.05, 0.08, or 0.1. Material B is a single-crystal material represented by a chemical formula of LiNiₓ₂Co_{y2}Mn_{1-x2-y2}O₂, where 0.8≤x2≤0.95, 0.03≤y2≤0.1, and 0<x2+y2<1. For example, x2 may be 0.8, 0.84, 0.88, 0.9, or 0.95, and y2 may be 0.03, 0.05, 0.08, or 0.1. Material C is a polycrystalline material represented by a chemical formula of LiNiₓ₃Co_{y3}Mn_{1-x3-y3}O₂, where 0.8≤x3≤0.95, 0.03≤y3≤0.1, and 0<x3+y3<1. For example, x3 may be 0.8, 0.84, 0.88, 0.9, or 0.95, and y3 may be 0.03, 0.05, 0.08, or 0.1. According to the content of element nickel in material A, material B, and material C, material A is a single-crystal medium-nickel material composed of primary particles, material B is a single-crystal high-nickel material composed of primary particles, and material C is a polycrystalline high-nickel material composed of secondary particles formed by agglomeration of primary particles. On the one hand, the above first positive electrode active material contains a plurality of active substances (such as Ni, Co, and Mn), such that the battery can store more electrical energy in the same volume, thereby ensuring the capacity performance of the positive electrode plate 100 and facilitating improvement of the energy density of the battery. On the other hand, a stable structure can be provided, side reactions can be reduced, and gas generation of the first positive electrode active material during cycling can be suppressed, which is beneficial to improving cycling performance of the battery.

Those skilled in the art can appreciate that, generally, an individual fine crystal grain is referred to as a primary particle, while a particle formed after agglomeration is referred to as a secondary particle. The particle size of the primary particle refers to the average particle size of primary particles, which can be determined by scanning electron microscope (SEM). An average particle size of the secondary particle has a meaning well known in the art, and can be determined by instruments and methods well known in the art. As an example, the average particle size of secondary particles may be determined through a laser diffraction particle size analysis. Specifically, the average particle size of the secondary particles may be determined with reference to the standard GB/T 19077-2016, using a laser particle size analyzer (for example, Malvern Master Size 3000).

It should be noted that, "medium nickel" means that the molar ratio A of element nickel to a transition metal element in the medium-nickel material satisfies 60%≤A<80%, and "high nickel" means that the molar ratio of element nickel to a transition metal element in the high-nickel material is not less than 80%.

According to some specific embodiments of the present disclosure, an average particle size of the primary particles of material A ranges from 2 µm to 6 µm. For example, the average particle size of the primary particles of material A may be 2 µm, 3 µm, 4 µm, 5 µm, or 6 µm. By limiting the average particle size of the primary particles of material A within the above range, the contact area between the single-crystal medium-nickel material and the electrolyte can be made moderate, and the diffusion path of lithium ions is shortened, which can reduce capacity fading and thus improve the cycling performance of the battery.

According to some specific embodiments of the present disclosure, a volume average particle size Dv50 of material A ranges from 1 µm to 6 µm. For example, the volume average particle size Dv50 may be 1 µm, 2 µm, 3 µm, 5 µm, or 6 µm. By controlling the volume average particle size Dv50 of material A within the above range, the pore structure and distribution of the first positive electrode active material can be adjusted, and the infiltration performance of the electrolyte and the transport efficiency of lithium ions can be improved, which is conducive to improving the rate capability of the battery and thus the cycling performance of the battery.

It should be noted that the volume average particle size Dv50 refers to a particle size at which the cumulative distribution of particles of material A is 50%. That is, the volume content of particles of material A having particle sizes smaller than this particle size accounts for 50% of total positive electrode active material particles, and the volume content of the particles of material A having particle sizes larger than this particle size also accounts for 50% of the total positive electrode active material particles. The volume average particle size Dv50 is measured using a laser particle size analyzer.

According to some specific embodiments of the present disclosure, a BET specific surface area of material A ranges from 0.5 m²/g to 1.5 m²/g. For example, the BET specific surface area of material A may be 0.5 m²/g, 1 m²/g, or 1.5 m²/g. By limiting the BET specific surface area of material A within the above range, on the one hand, the electrochemical reaction activity of the first positive electrode active material can be controlled, which is conducive to increasing the energy density of the positive electrode plate 100. On the other hand, interfacial side reactions and gas generation can be reduced, thereby improving the cycling performance of the battery.

Specifically, the BET specific surface area of material A may be determined by the following method. A gas adsorption BET method is used to determine the BET specific surface area of a solid substance with nitrogen gas as an adsorbent. The BET specific surface area of a sample is characterized by the number of nitrogen molecules closely packed and covered

(adsorbed) on the surface of the sample as well as the maximum cross-sectional area of the molecules. The equilibrium saturated adsorption amount (V) of nitrogen molecules on the surface of the sample is actually determined, and the monolayer saturated adsorption amount (Vm) is calculated according to different theoretical models. Thus, the number of molecules is obtained. The equivalent maximum cross-sectional area (Am) of nitrogen molecules is calculated using a surface close-packed hexagonal model. Thus, the BET specific surface area of the sample to be measured can be obtained. The calculation formula is as follows: S_{g}=VₘNAₘ/22400W, where S_{g} represents the BET specific surface area (m²/g) of the sample to be measured, Vₘ represents the monolayer saturated adsorption amount (mL) of nitrogen molecules under standard conditions, Aₘ represents the equivalent maximum cross-sectional area of nitrogen molecules (a theoretical value of a close-packed hexagon: Am=0.162 nm²), W represents the mass (g) of the sample to be measured, and N represents Avogadro's constant (6.02x10²³).

According to some specific embodiments of the present disclosure, an average particle size of the primary particles of material B ranges from 1 µm to 3 µm. For example, the average particle size of the primary particles of material B may be 1 µm, 2 µm, or 3 µm. By limiting the average particle size of the primary particles of material B within the above range, the contact area between material B and the electrolyte can be made moderate, and the diffusion path of lithium ions is shortened, which can reduce capacity fading and thus improve the cycling performance of the battery.

According to some specific embodiments of the present disclosure, a volume average particle size Dv50 of material B ranges from 1 µm to 5 µm. For example, the volume average particle size Dv50 of material B may be 1 µm, 3 µm, 4 µm, or 5 µm. By controlling the D50 of material B within the above range, the pore structure and distribution of the first positive electrode active material can be adjusted, and the infiltration performance of the electrolyte and the transport efficiency of lithium ions can be improved, which is conducive to improving the rate capability of the battery and thus the cycling performance of the battery.

According to some specific embodiments of the present disclosure, a BET specific surface area of material B ranges from 0.5 m²/g to 1.5 m²/g. For example, the BET specific surface area of material B may be 0.5 m²/g, 1 m²/g, or 1.5 m²/g. By limiting the BET specific surface area of material B within the above range, on the one hand, the electrochemical reaction activity of the first positive electrode active material can be controlled, which is conducive to increasing the energy density of the positive electrode plate 100. On the other hand, interfacial side reactions and gas generation can be reduced, thereby improving the cycling performance of the battery.

According to some specific embodiments of the present disclosure, an average particle size of the primary particles of material C ranges from 50 nm to 1,000 nm. For example, the average particle size of the primary particles of material C may be 50 nm, 100 nm, 300 nm, 600 nm, 800 nm, or 1,000 nm. Material C is a polycrystalline material, i.e., composed of secondary particles formed by agglomeration of primary particles. By limiting the average particle size of the primary particles of material C within the above range, structural parameters such as pore size and a BET specific surface area of material C can be controlled, the ion diffusion path can be shortened, and ionic conductivity can be improved, thereby improving the rate capability of the battery.

According to some specific embodiments of the present disclosure, an average particle size of the secondary particles of material C ranges from 5 µm to 20 µm. For example, the average particle size of the secondary particles of material C may be 5 µm, 10 µm, 15 µm, or 20 µm. By limiting the average particle size of the secondary particles of material C within the above range, the contact area between material C and the electrolyte can be made moderate, and the diffusion path of lithium ions is shortened, which can reduce capacity fading and thus improve the cycling performance of the battery.

According to some specific embodiments of the present disclosure, a volume average particle size Dv50 of material C ranges from 7 µm to 18 µm. For example, the volume average particle size Dv50 of material C may be 7 µm, 10 µm, 15 µm, or 18 µm. By limiting the volume average particle size Dv50 of material C within the above range, the pore structure and distribution of the first positive electrode active material can be adjusted, and the infiltration performance of the electrolyte and the transport efficiency of lithium ions can be improved, which is conducive to improving the rate capability of the battery and thus the cycling performance of the battery.

According to some specific embodiments of the present disclosure, the BET specific surface area of material C ranges from 0.2 m²/g to 1 m²/g. For example, the BET specific surface area of material C may be 0.2 m²/g, 0.5 m²/g, 0.8 m²/g, or 1 m²/g. By limiting the BET specific surface area of material C within the above range, on the one hand, the electrochemical reaction activity of the first positive electrode active material can be controlled, which is conducive to increasing the energy density of the positive electrode plate 100. On the other hand, interfacial side reactions and gas generation can be reduced, thereby improving the cycling performance of the battery.

According to some specific embodiments of the present disclosure, the first positive electrode active material includes material B and material C. Material B is a single-crystal high-nickel material, and material C is a polycrystalline high-nickel material. By using a mixture of the single-crystal high-nickel material and the polycrystalline high-nickel material as the first positive electrode active material, on the one hand, the polycrystalline material has satisfactory processing flowability, and the single-crystal material has satisfactory mechanical strength. By using these two materials in combination, better processing performance can be obtained. On the other hand, the polycrystalline material has a high energy density and satisfactory cycling stability, while the single-crystal material has high cycling performance and fast charge-discharge capability. By using these two materials in combination, their respective advantages can be comprehensively utilized, thereby improving the cycling performance of the battery.

According to some specific embodiments of the present disclosure, a mass ratio of material B to material C is (2 to 3):(7 to 8). For example, the mass ratio of material B to material C may be 2:8 or 3:7. By limiting the mass ratio of material B to material C within the above range, the proportions of material B and material C in the first positive electrode active material layer 12 can be adjusted, which is beneficial to improving the cycling performance of the battery.

According to some specific embodiments of the present disclosure, when the first positive electrode active material includes material B and material C, a volume average particle size Dv50 of the first positive electrode active material ranges from 5 µm to 15 µm. For example, the volume average particle size Dv50 of the first positive electrode active material may be 5 µm, 8 µm, 10 µm, 12 µm, or 15 µm. By limiting the mixed volume average particle size Dv50 of material B and material C within the above range, the contact area between the first positive electrode active material and the electrolyte can be made moderate, and the diffusion path of lithium ions is shortened, which can reduce capacity fading and thus improve the cycling performance of the battery.

According to an embodiment of the present disclosure, referring to FIG. 1, the second positive electrode active material layer 13 is disposed on a side of the first positive electrode active material layer 12 away from the current collector 11. The second positive electrode active material layer 13 includes a second positive electrode active material. An electrochemical potential window of the second positive electrode active material is greater than an electrochemical potential window of the first positive electrode active material. Thus, the second positive electrode active material layer 13 including the second positive electrode active material is formed on the first positive electrode active material layer 12, that is, the first positive electrode active material layer 12 is located between the current collector 11 and the second positive electrode active material layer 13. In addition, the electrochemical potential window of the second positive electrode active material is greater than the electrochemical potential window of the first positive electrode active material. As a result, the high-voltage resistance performance of the second positive electrode active material layer 13 is better than that of the first positive electrode active material layer 12. During charge-discharge cycling, the second positive electrode active material layer 13 can withstand the high voltage on the separator side, thereby reducing the voltage difference between the separator side and the current collector 11 side of the positive electrode plate 100, which is beneficial to suppressing transition of the internal structure of the second positive electrode active material. Further, the arrangement of the second positive electrode active material layer can also protect the first positive electrode active material, thereby reducing structural damage thereto caused by high voltage and improving the cycling performance of the battery.

The electrochemical potential window refers to the potential range between the highest potential and the most negative potential within which an electrode material can stably exist without decomposition, namely, the range between the most positive potential and the most negative potential of the electrode material.

According to some specific embodiments of the present disclosure, the second positive electrode active material includes at least one of a lithium-rich manganese-based material and lithium manganese iron phosphate. The lithium-rich manganese-based material is represented by a chemical formula of aLi₂MnO₃·(1-a)LiNiₓ₄Co_{y4}Mn_{1-x4-y4}O₂, where 0≤a≤1, 0.2≤x4≤1, 0≤y4≤0.5, and 0<x4+y4<1. For example, a may be 0.2, 0.5, or 0.8, x4 may be 0.33, 0.5, 0.6, 0.7, or 0.8, and y4 may be 0, 0.1, 0.2, 0.3, 0.33, or 0.4. The lithium manganese iron phosphate is represented by a chemical formula of LiMnₓ₅Fe₁₋ₓ₅PO₄, where 0.2≤x5≤0.8. For example, x5 may be 0.2, 0.4, 0.5, 0.6, or 0.8. The above second positive electrode active material has high electrochemical potential window and can effectively withstand the high voltage on the separator side during charging and the discharging of the positive electrode plate, thereby improving the structural stability of the positive electrode plate near the separator side and the structural stability inside the positive electrode active material, which is beneficial to improving the cycling performance of the battery.

According to some specific embodiments of the present disclosure, the first positive electrode active material includes material A, and the second positive electrode active material includes the lithium-rich manganese-based material. When the medium-nickel material A is selected as the first positive electrode active material, the lithium-rich manganese-based material may be selected as the second positive electrode active material. The medium-nickel material contains a plurality of active substances (such as Ni, Co, and Mn), such that the battery can store more electrical energy in the same volume, thereby ensuring the capacity performance of the positive electrode plate 100 and facilitating improvement of the energy density of the battery. In addition, Ni, Co, and Mn also exhibit satisfactory chemical stability during charging and discharging of the battery, thereby effectively improving the cycling performance of the battery. The lithium-rich manganese-based material has a high electrochemical potential window (4.6 V), and can effectively withstand the high voltage on the separator side during charging and discharging of the positive electrode plate, thereby improving the structural stability of the positive electrode plate near the separator side and the structural stability inside the positive electrode active material, which is beneficial to improving the cycling performance of the battery.

According to some specific embodiments of the present disclosure, the first positive electrode active material includes at least one of material B and material C, and the second positive electrode active material includes lithium manganese iron phosphate. When a high-nickel material is selected as the first positive electrode active material, the lithium manganese iron phosphate may be selected as the second positive electrode active material. The high-nickel material contains a plurality of active substances (such as Ni, Co, and Mn), such that the battery can store more electrical energy in the same volume, thereby ensuring the capacity performance of the positive electrode plate 100. In addition, Ni, Co, and Mn also exhibit satisfactory chemical stability during charging and discharging of the battery, thereby effectively improving the cycling performance of the battery. The lithium manganese iron phosphate has a high electrochemical potential window (>4.2 V), and can effectively withstand the high voltage on the separator side during charging and discharging of the positive electrode plate, thereby improving the structural stability of the positive electrode plate near the separator side and the structural stability inside the positive electrode active material, which is beneficial to improving the cycling performance of the battery.

According to some specific embodiments of the present disclosure, an average particle size of the primary particles of the lithium-rich manganese-based material ranges from 50 nm to 800 nm. For example, the average particle size of the primary particles of the lithium-rich manganese-based material may be 50 nm, 100 nm, 300 nm, 500 nm, or 800 nm. The lithium-rich manganese-based material is a polycrystalline material, composed of secondary particles formed by agglomeration of primary particles. By limiting the average particle size of the primary particles of the lithium-rich manganese-based material within the above range, on the one hand, structural parameters such as pore size and BET specific surface area of the polycrystalline material can be controlled, thereby shortening the diffusion path of lithium ions and improving ionic conductivity, thus improving the charge-discharge performance of the battery. On the other hand, the mechanical strength and thermal stability of the second positive electrode active material can be increased, thereby improving the cycling performance of the battery.

According to some specific embodiments of the present disclosure, an average particle size of the secondary particles of the lithium-rich manganese-based material ranges from 10 µm to 20 µm. For example, the average particle size of the secondary particles of the lithium-rich manganese-based material may be 10 µm, 12 µm, 15 µm, 18 µm, or 20 µm. By limiting the average particle size of the secondary particles of the lithium-rich manganese-based material within the above range, the contact area between the lithium-rich manganese-based material and the electrolyte can be made moderate, and the diffusion path of lithium ions is shortened, which can reduce capacity fading and thus improve the cycling performance of the battery.

According to some specific embodiments of the present disclosure, a volume average particle size Dv50 of the lithium-rich manganese-based material ranges from 10 µm to 20 µm. For example, the volume average particle size Dv50 of the lithium-rich manganese-based material may be 10 µm, 12 µm, 15 µm, 17 µm, or 20 µm. By limiting the volume average particle size Dv50 of the lithium-rich manganese-based material within the above range, the pore structure and distribution of the second positive electrode active material can be adjusted, and the infiltration performance of the electrolyte and the transport efficiency of lithium ions can be improved, which is conducive to improving the rate capability of the battery and thus the cycling performance of the battery.

According to some specific embodiments of the present disclosure, a BET specific surface area of the lithium-rich manganese-based material ranges from 0.2 m²/g to 1 m²/g. For example, the BET specific surface area of the lithium-rich manganese-based material may be 0.2 m²/g, 0.5 m²/g, 0.7 m²/g, 0.9 m²/g, or 1 m²/g. By limiting the BET specific surface area of the lithium-rich manganese-based material within the above range, on the one hand, the electrochemical reaction activity of the second positive electrode active material can be controlled, which is conducive to increasing the energy density of the positive electrode plate 100. On the other hand, interfacial side reactions and gas generation can be reduced, thereby improving the cycling performance of the battery.

According to some specific embodiments of the present disclosure, an average particle size of the primary particles of the lithium manganese iron phosphate ranges from 20 nm to 300 nm. For example, the average particle size of the primary particles of the lithium manganese iron phosphate may be 20 nm, 50 nm, 100 nm, 200 nm, or 300 nm. On the one hand, structural parameters such as pore size and BET specific surface area of the lithium manganese iron phosphate can be controlled, thereby shortening the diffusion path of lithium ions and improving ionic conductivity, thus improving the charge-discharge performance of the battery. On the other hand, the mechanical strength and thermal stability of the second positive electrode active material can be increased, thereby improving the cycling performance of the battery.

According to some specific embodiments of the present disclosure, a volume average particle size Dv50 of the lithium manganese iron phosphate ranges from 0.2 µm to 1.5 µm. For example, the volume average particle size Dv50 of the lithium manganese iron phosphate may be 0.2 µm, 0.5 µm, 1 µm, or 1.5 µm. By controlling the D50 of the lithium manganese iron phosphate within the above range, the pore structure and distribution of the second positive electrode active material can be adjusted, and the infiltration performance of the electrolyte and the transport efficiency of lithium ions can be improved, which is conducive to improving the rate capability of the battery and thus the cycling performance of the battery.

According to some specific embodiments of the present disclosure, a BET specific surface area of the lithium manganese iron phosphate ranges from 10 m²/g to 30 m²/g. For example, the BET specific surface area of the lithium manganese iron phosphate may be 10 m²/g, 20 m²/g, or 30 m²/g. By limiting the BET specific surface area of the lithium manganese iron phosphate within the above range, on the one hand, the electrochemical reaction activity of the second positive electrode active material can be controlled, which is conducive to increasing the energy density of the positive electrode plate 100. On the other hand, interfacial side reactions and gas generation can be reduced, thereby improving the cycling performance of the battery.

According to some specific embodiments of the present disclosure, the lithium manganese iron phosphate further includes a carbon coating layer. The carbon coating layer covers at least a portion of the surface of the lithium manganese iron phosphate. By providing the carbon coating layer on at least a portion of the surface of the lithium manganese iron phosphate, on the one hand, direct contact between the lithium manganese iron phosphate and the electrolyte can be avoided, thereby reducing side reactions and gas generation, which can further improve the cycling stability of the battery. On the other hand, the electrical conductivity of the material can also be improved, thereby further improving the rate capability of the battery.

According to some specific embodiments of the present disclosure, based on the total mass of the lithium manganese iron phosphate, a mass proportion of the carbon coating layer ranges from 0.2% to 3%. For example, the mass proportion of the carbon coating layer may be 0.2%, 0.5%, 1%, 2%, or 3%. By limiting the mass proportion of the carbon coating layer within the above range, direct contact between the lithium manganese iron phosphate and the electrolyte can be avoided, thereby reducing side reactions and gas generation, which can further improve the cycling stability of the battery.

According to some specific embodiments of the present disclosure, based on the total mass of the first positive electrode active material layer 12 and the second positive electrode active material layer 13, a mass proportion of the first positive electrode active material layer 12 ranges from 70% to 90%. For example, the mass proportion of the first positive electrode active material layer 12 may be 70%, 80%, or 90%. By limiting the mass proportion of the first positive electrode active material layer 12 within the above range, it can be ensured that the first positive electrode active material layer 12 satisfies the requirements of high energy density and stability, while also ensuring that the second positive electrode active material layer 13 has high-voltage resistance performance and can withstand the high voltage on the separator side during charging and discharging of the positive electrode plate 100, which is conducive to improving the cycling performance of the battery.

According to some specific embodiments of the present disclosure, a compaction density of the positive electrode active material layer in the positive electrode plate 100 ranges from 3.2 g/cm³ to 3.7 g/cm³. For example, the compaction density of the positive electrode active material layer in the positive electrode plate 100 may be 3.2 g/cm³, 3.5 g/cm³, or 3.7 g/cm³. By limiting the compaction density of the positive electrode active material layer in the positive electrode plate 100 within the above range, lithium ions can be promoted to be more effectively intercalated and deintercalated, which is beneficial to increasing the discharge capacity of the battery, reducing internal resistance, reducing polarization loss, and improving the cycling performance of the battery.

It should be noted that the positive electrode active material layer refers collectively to the first positive electrode active material layer 12 and the second positive electrode active material layer 13.

According to some specific embodiments of the present disclosure, an areal density of the positive electrode active material layer in the positive electrode plate 100 may range from 100 g/m² to 400 g/m². For example, the areal density of the positive electrode active material layer in the positive electrode plate 100 may be 100 g/m², 250 g/m², or 400 g/m². By adjusting the areal density of the positive electrode active material layer, the transmission path of lithium ions can be optimized and internal resistance can be reduced, which is beneficial to improving the cycling performance of the battery.

It should be noted that, the first positive electrode active material layer 12 may be formed on one side of the current collector 11, or the first positive electrode active material layer 12 may also be formed on both sides of the current collector 11, which can be selected by those skilled in the art according to actual needs.

In a second aspect of the present disclosure, the present disclosure provides a method for preparing the positive electrode plate 100. According to an embodiment of the present disclosure, referring to FIG. 2, the method includes the following steps.

S1: Forming a first positive electrode active material layer 12 including a first positive electrode active material on at least one side of a current collector 11

In this step, the first positive electrode active material layer 12 is formed on at least one side of the current collector 11 by using the first positive electrode active material. Accordingly, by forming the first positive electrode active material layer 12 including the first positive electrode active material on at least one side of the current collector 11, the cycling performance of the battery can be improved.

According to a specific embodiment of the present disclosure, forming the first positive electrode active material layer 12 including the first positive electrode active material on at least one side of the current collector 11 is performed by the following steps.

S11: mixing the first positive electrode active material, a first conductive agent, and a first solvent to obtain a first slurry.

In this step, the first positive electrode active material, the first conductive agent, and the first solvent are mixed and stirred to obtain the first slurry.

According to some specific embodiments of the present disclosure, the first slurry further includes a first binder, and a mass ratio of the first positive electrode active material, the first binder, and the first conductive agent is (0.95 to 0.98):(0 to 0.3):(0.02 to 0.05). For example, the mass ratio of the first positive electrode active material, the first binder, and the first conductive agent may be 0.95:0.1:0.02, 0.98:0.3:0.05, or 0.96:0.2:0.04. The first positive electrode active material can improve the cycling performance of the battery. In the positive electrode plate 100, the first binder and a first conductive agent function to connect the first positive electrode active material and reinforce the electrode structure. By limiting the mass ratio of the first positive electrode active material, the first binder, and the first conductive agent within the above range, high energy density of the battery can be ensured, and the cycling performance of the battery can be improved.

As an example, the first binder includes, but is not limited to, polyvinylidene fluoride. The first conductive agent includes, but is not limited to, at least one of conductive carbon black, carbon nanotubes, or carbon nanofibers. The first solvent includes, but is not limited to, N-methylpyrrolidone.

S12: coating the first slurry on at least one side of the current collector 11, and performing first drying to obtain the first positive electrode active material layer 12.

In this step, the first positive electrode active material layer 12 is obtained by coating the first slurry on at least one side of the current collector 11 and performing the first drying.

According to some specific embodiments of the present disclosure, a temperature of the first drying ranges from 60°C to 80°C. For example, the temperature of the first drying may be 60°C, 70°C, or 80°C. By limiting the temperature of the first drying within the above range, on the one hand, the evaporation rate of moisture can be controlled to avoid cracks on the material surface. On the other hand, the curing process of the binder can be promoted, such that the positive electrode plate 100 has satisfactory mechanical strength and stability.

According to some specific embodiments of the present disclosure, a duration of the first drying ranges from 3 min to 10 min. For example, the duration of the first drying may be 3 min, 5 min, or 7 min. By limiting the duration of the first drying within the above range, curing of the structure of the positive electrode plate 100 can be promoted, thereby improving the stability and consistency of the positive electrode plate 100.

S2: Forming a second positive electrode active material layer 13 including a second positive electrode active material on a side of the first positive electrode active material layer 12 away from the current collector 11

In this step, the second positive electrode active material layer 13 including the second positive electrode active material is formed on the first positive electrode active material layer 12, that is, the first positive electrode active material layer 12 is located between the current collector 11 and the second positive electrode active material layer 13. In addition, the electrochemical potential window of the second positive electrode active material is greater than the electrochemical potential window of the first positive electrode active material. As a result, the high-voltage resistance performance of the second positive electrode active material layer 13 is better than that of the first positive electrode active material layer 12. During charge-discharge cycling, the voltage difference between the separator side and the current collector 11 side of the positive electrode plate 100 can be reduced, which is beneficial to suppressing transition of the internal structure of the positive electrode active material, thereby improving the cycling performance of the battery.

According to a specific embodiment of the present disclosure, forming the second positive electrode active material layer 13 including the second positive electrode active material on the side of the first positive electrode active material layer 12 away from the current collector 11 is performed by the following steps.

S21: mixing the second positive electrode active material, a second conductive agent, and a second solvent to obtain a second slurry.

In this step, the second positive electrode active material, the second conductive agent, and the second solvent are mixed and stirred to obtain the second slurry.

According to some specific embodiments of the present disclosure, the first slurry further includes a second binder, and a mass ratio of the second positive electrode active material, the second binder, and the second conductive agent is (0.95 to 0.98): (0 to 0.3): (0.02 to 0.05). For example, the mass ratio of the second positive electrode active material, the second binder, and the second conductive agent may be 0.95:0.1:0.02, 0.98:0.3:0.05, or 0.96:0.2:0.04. The second positive electrode active material can improve the high-voltage resistance performance and cycling performance of the positive electrode plate 100. In the positive electrode plate 100, the second binder and the second conductive agent function to connect the second positive electrode active material and reinforce the structure of the positive electrode plate 100. By limiting the mass ratio of the second positive electrode active material, the second binder, and the second conductive agent within the above range, the high voltage on the separator side during charging and discharging of the positive electrode plate 100 can be resisted, which is conducive to improving the cycling performance of the battery.

As an example, the second binder includes, but is not limited to, polyvinylidene fluoride. The second conductive agent includes, but is not limited to, at least one of conductive carbon black, carbon nanotubes, or carbon nanofibers. The second solvent includes, but is not limited to, N-methylpyrrolidone.

S22: coating the second slurry on the side of the first positive electrode active material layer 12 away from the current collector 11, and performing second drying to obtain the second positive electrode active material layer 13.

In this step, by coating the second slurry on the side of the first positive electrode active material layer 12 away from the current collector 11 and performing the second drying followed by roll pressing, the second positive electrode active material layer 13, i.e., the positive electrode plate 100, can be obtained.

According to some specific embodiments of the present disclosure, a temperature of the second drying ranges from 110°C to 130°C. For example, the temperature of the second drying may be 110°C, 120°C, or 130°C. By limiting the temperature of the second drying within the above range, on the one hand, the evaporation rate of moisture can be controlled to avoid cracks on the material surface. On the other hand, the curing process of the binder can be promoted, such that the positive electrode plate 100 has satisfactory mechanical strength and stability.

According to some specific embodiments of the present disclosure, a duration of the second drying ranges from 5 min to 20 min. For example, the duration of the second drying may be 5 min, 10 min, or 20 min. By limiting the duration of the second drying within the above range, curing of the structure of the positive electrode plate 100 can be promoted, thereby improving the stability and consistency of the positive electrode plate 100.

In a third aspect of the present disclosure, the present disclosure provides a battery. According to an embodiment of the present disclosure, the battery includes the above positive electrode plate 100 or the positive electrode plate 100 prepared using the above method. The positive electrode plate 100 has satisfactory cycling performance, enabling the battery to have satisfactory comprehensive performance and satisfactory cycling performance.

As used herein, "battery" refers to a battery in which active materials can be reactivated after discharge by charging, such that the battery can continue to be used.

Typically, the battery includes a positive electrode plate 100, a negative electrode plate, a separator, and an electrolyte. During charging and discharging of the battery, active ions (lithium ions) are repeatedly intercalated into and deintercalated from the positive electrode plate 100 and the negative electrode plate. The separator is disposed between the positive electrode plate 100 and the negative electrode plate to provide separation. The electrolyte functions to conduct ions between the positive electrode plate 100 and the negative electrode plate.

According to some specific embodiments of the present disclosure, the battery may be a lithium-ion secondary battery.

The embodiments of the present disclosure have no particular limitation on the shape of the battery, which may be cylindrical, prismatic, or any other arbitrary shape.

In a fourth aspect of the present disclosure, the present disclosure provides a vehicle. According to an embodiment of the present disclosure, the vehicle includes the above battery. The battery has satisfactory cycling performance. Thus, compared with the related art, the vehicle has good stability and high market satisfaction. For example, the vehicle may include, but is not limited to, a pure electric vehicle and a hybrid electric vehicle.

The solutions of the present disclosure will be explained below in conjunction with examples. Those skilled in the art will appreciate that the following examples are only used to illustrate the present disclosure, and should not be construed as limiting the scope of the present disclosure. Where specific techniques or conditions are not indicated in the examples, the techniques or conditions described in literature in the art or according to product specifications shall be followed. The reagents or instruments used without the indication of the manufacturers are all conventional products that can be purchased commercially.

### Example 1

### 1. Preparation of First Positive Electrode Active Material Layer

(1) Selection of raw materials: The first positive electrode active material was material A (single-crystal medium-nickel material) represented by a chemical formula of LiNi_{0.68}Co_{0.07}Mn_{0.25}O₂. The average particle size of the primary particles of material A was 5 µm. The volume average particle size Dv50 of material A was 3.52 µm. The BET specific surface area of material A was 0.85 m²/g. The first binder was polyvinylidene fluoride. The first conductive agent was conductive carbon black and carbon nanotubes. The first solvent was the N-methylpyrrolidone.
(2) Preparation of first slurry: Material A, conductive carbon black, carbon nanotubes, and polyvinylidene fluoride were mixed at a mass ratio of 97.3:1.2:0.5:1, and then mixed with an appropriate amount of N-methylpyrrolidone and stirred uniformly to obtain a first slurry.
(3) The first slurry was uniformly coated on a composite aluminum current collector. The composite current collector was composed two layers of aluminum foil each having a thickness of 1.5 µm and a polypropylene interlayer having a thickness of 10 µm. Then, drying was performed at a temperature of 60°C for 10 min to obtain a first positive electrode active material layer.

### 2. Preparation of Second Positive Electrode Active Material Layer

(1) Selection of raw materials: The second positive electrode active material was a lithium-rich manganese-based material represented by a chemical formula of 0.5Li₂MnO₃·0.5LiNi_{0.33}Co_{0.34}Mn_{0.33}O₂. The average particle size of the primary particles of the lithium-rich manganese-based material was 400 nm. The average particle size of the lithium-rich manganese-based material was 14 µm. The volume average particle size Dv50 of the lithium-rich manganese-based material was 13.38 µm. The BET specific surface area of the lithium-rich manganese-based material was 0.44 m²/g. The first binder was polyvinylidene fluoride. The first conductive agent was conductive carbon black and carbon nanotubes. The first solvent was N-methylpyrrolidone.
(2) Preparation of second slurry: The lithium-rich manganese-based material, conductive carbon black, carbon nanotubes, and polyvinylidene fluoride were mixed at a mass ratio of 97.3:1.2:0.5:1, and then mixed with an appropriate amount of N-methylpyrrolidone and stirred uniformly to obtain a second slurry.
(3) The second slurry was uniformly coated on the dried first positive electrode active material layer, dried at a temperature of 110°C for 15 min, and then roll-pressed after drying, to obtain a second positive electrode active material layer, i.e., the positive electrode plate. The mass ratio of the first positive electrode active material layer to the second positive electrode active material layer was 7:3.

2. Preparation of Battery: The positive electrode plate prepared above, a graphite negative electrode plate, a separator, and an electrolyte were assembled into a pouch battery for subsequent performance testing. The separator was a PP/PE composite film material. The electrolyte used a mixed solvent having a mass ratio of EC:DEC:DMC=1:1:1, and the electrolyte salt was 1 M lithium hexafluorophosphate.

The batteries of Example 2 to Example 8 and Comparative Example 1 to Comparative Example 4 were the same as the battery of Example 1, except that the parameters of the positive electrode plates were different (see Table 1).

Experimental parameters of the positive electrode plates of Example 1 to Example 8 and Comparative Example 1 to Comparative Example 4 of the present disclosure are shown in Table 1.

**[Table 1]**

| | First positive electrode active material layer | | | | Second positive electrode active material layer | | |
|---|---|---|---|---|---|---|---|
| | First positive electrode active material | Chemical formula of first positive electrode active material | Dv50 of first positive electrode active material/ µm | BET specific surface area of first positive electrode active material /m²·g⁻¹ | Chemical formula of second positive electrode active material | Dv50 of second positive electrode active material /µm | BET specific surface area of second positive electrode active material /m²·g⁻¹ |
| Example 1 | Material A | LiNi_{0.68}Co_{0. 07}Mn_{0.25}O₂ | 3.52 | 0.85 | 0.5Li₂MnO₃ ·0.5LiNi_{0.33} Co_{0.34}Mn_{0.33} O₂ | 13.38 | 0.44 |
| Example 2 | Material A | LiNi_{0.75}Co_{0. 1}Mn_{0.15}O₂ | 3.43 | 0.80 | 0.5Li₂MnO₃ ·0.5LiNi_{0.33} Co_{0.34}Mn_{0.33} O₂ | 13.38 | 0.44 |
| Example 3 | Material A | LiNi_{0.68}Co_{0. 07}Mn_{0.25}O₂ | 3.52 | 0.85 | 0.5Li₂MnO₃ ·0.5LiNi_{0.5}C o_{0.1}Mn_{0.4}O₂ | 12.43 | 0.45 |
| Example 4 | Material A | LiNi_{0.75}Co_{0. 1}Mn_{0.15}O₂ | 3.43 | 0.80 | 0.5Li₂MnO₃ ·0.5LiNi_{0.5}C o_{0.1}Mn_{0.4}O₂ | 12.43 | 0.45 |
| Example 5 | Material B, Material C | LiNi_{0.9}Co_{0.0 7}Mn_{0.03}O₂ | 10.72 | 0.43 | LiMn_{0.6}Fe_{0.4} PO₄ | 0.602 | 18.756 |
| Example 6 | Material B, Material C | LiNi_{0.8}Co_{0.1} Mn_{0.1}O₂ | 11.553 | 0.37 | LiMn_{0.6}Fe_{0.4} PO₄ | 0.602 | 18.756 |
| Example 7 | Material B, Material C | LiNi_{0.9}Co_{0.0 7}Mn_{0.03}O₂ | 10.72 | 0.43 | LiMn_{0.4}Fe_{0.6} PO₄ | 0.549 | 16.066 |
| Example 8 | Material B, Material C | LiNi_{0.8}Co_{0.1} Mn_{0.1}O₂ | 11.553 | 0.37 | LiMn_{0.4}Fe_{0.6} PO₄ | 0.549 | 16.066 |
| Comparative Example 1 | Material A | LiNi_{0.68}Co_{0. 07}Mn_{0.25}O₂ | 3.52 | 0.85 | / | | |
| Comparative Example 2 | Material A | LiNi_{0.75}Co_{0. 1}Mn_{0.15}O₂ | 3.43 | 0.80 | / | | |
| Comparative Example 3 | Material B, Material C | LiNi_{0.9}Co_{0.0 7}Mn_{0.03}O₂ | 10.72 | 0.43 | / | | |
| Comparative Example 4 | Material B, Material C | LiNi_{0.8}Co_{0.1} Mn_{0.1}O₂ | 11.553 | 0.37 | / | | |

| | | | | | | | |
|---|---|---|---|---|---|---|---|
| "/" indicates not present. | | | | | | | |

### Test and Analysis

Under the same conditions, the cycling performance of the pouch batteries prepared in the above Example 1 to Example 8 and Comparative Example 1 to Comparative Example 4 was tested. The specific test method was as follows.

When the first positive electrode active material in the first positive electrode active material layer was material A, the electrochemical test voltage range was 2.8 V to 4.4 V. When the first positive electrode active material in the first positive electrode active material layer was a mixture of material B and material C, the electrochemical test voltage range was 2.8 V to 4.25 V.

Cycling performance test: under charge-discharge cycling, the charge-discharge rate was set to 0.33 C, and the test temperature was 25°C. The capacity retention rate after 1,000 cycles was calculated. Capacity retention rate after 1,000 cycles (%) = capacity after 1,000 cycles/initial capacity.

The test results are shown in Table 2.

**[Table 2]**

| | Initial capacity (Ah) | Capacity retention rate after 1,000 cycles (%) |
|---|---|---|
| Example 1 | 3.612 | 88.9 |
| Example 2 | 3.729 | 88.2 |
| Example 3 | 3.621 | 87.3 |
| Example 4 | 3.735 | 87.1 |
| Example 5 | 3.764 | 85.1 |
| Example 6 | 3.659 | 86.2 |
| Example 7 | 3.789 | 85.4 |
| Example 8 | 3.672 | 86.8 |
| Comparative Example 1 | 3.628 | 82.4 |
| Comparative Example 2 | 3.737 | 81.7 |
| Comparative Example 3 | 3.844 | 80.3 |
| Comparative Example 4 | 3.782 | 80.9 |

Table 1 and Table 2 reveal that, compared with the batteries obtained in Comparative Example 1 to Comparative Example 4, the batteries obtained in Example 1 to Example 8 exhibited better cycling performance. In Example 1, the first positive electrode active material layer containing material A and the second positive electrode active material layer containing the lithium-rich manganese-based material were employed. The mass ratio of the first positive electrode active material layer to the second positive electrode active material layer was 7:3, and the charge-discharge voltage window range was 2.8 V to 4.4 V. Since the voltage at the end of charging was relatively high, a high-voltage material, namely the lithium-rich manganese-based material, was selected as the second positive electrode active material layer. In Comparative Example 1, only material A was employed to prepare the positive electrode plate, which was used to prepare the pouch battery, and no high-voltage-resistant surface layer was present. As a result, during the later stage of charge-discharge cycling, the voltage at the portion of the positive electrode plate close to the separator was higher than the voltage at the portion of the positive electrode plate close to the current collector. Thus, the positive electrode material of the positive electrode plate close to the separator preferentially underwent structural transition and was more prone to side reactions, thereby affecting the cycling performance of the battery.

In Example 1, the high-voltage-resistant surface layer was present. Compared with Comparative Example 1, the discharge capacity of the pouch battery was slightly reduced because within the charge-discharge voltage range of material A (2.8 V to 4.4 V), the lithium-rich manganese-based material could not fully exhibit its inherent capacity. However, the capacity retention rate after 1,000 cycles of Example 1 was much higher than that of Comparative Example 1. This is because, during the later stage of cycling, the lithium-rich manganese-based material in the second positive electrode active material layer could withstand higher voltage and provide higher capacity. By supplementing capacity, capacity fading of the pouch battery was suppressed, thereby achieving excellent cycling performance. In addition, the lithium-rich manganese-based material was composed of large polycrystalline particles, which could form large pores in the second positive electrode active material layer. Thus, the pores had a low tortuosity, thereby providing rapid transport channels for lithium ions, which is beneficial to improving the rate capability of the battery.

Therefore, in the present disclosure, the positive electrode active material coating of the positive electrode plate is divided into the first positive electrode active material layer and the second positive electrode active material layer. Slurries are separately prepared according to different mass fractions, sequentially coated on the current collector layer by layer, dried, and roll-pressed to prepare a positive electrode plate having excellent cycling performance. Thus, high-voltage resistance of the positive electrode active material layer is realized while optimizing the internal pore structure of the positive electrode plate, which can further improve the cycling performance of the battery.

Reference throughout this specification to "an embodiment", "some embodiments", "an example", "a specific example", "some implementations", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

## Claims

1. A positive electrode plate, comprising:
a current collector;
a first positive electrode active material layer disposed on at least one side of the current collector, wherein the first positive electrode active material layer comprises a first positive electrode active material, the first positive electrode active material comprising LiNiₓCo_{y}Mn_{1-x-y}O₂, where 0.6≤x≤0.95, 0.03≤y≤0.1, and 0<x+y<1; and
a second positive electrode active material layer disposed on a side of the first positive electrode active material layer away from the current collector, wherein the second positive electrode active material layer comprises a second positive electrode active material, an electrochemical potential window of the second positive electrode active material being greater than an electrochemical potential window of the first positive electrode active material.

2. The positive electrode plate according to claim 1, wherein the first positive electrode active material comprises at least one of a material A, a material B, or a material C, wherein:
the material A is a single-crystal material represented by a chemical formula of LiNiₓ₁Co_{y1}Mn_{1-x1-y1}O₂, where 0.6≤x1<0.8, 0.03≤y1≤0.1, and 0<x1+y1<1;
the material B is a single-crystal material represented by a chemical formula of LiNiₓ₂Co_{y2}Mn_{1-x2-y2}O₂, where 0.8≤x2≤0.95, 0.03≤y2≤0.1, and 0<x2+y2<1; and
the material C is a polycrystalline material represented by a chemical formula of LiNiₓ₃Co_{y3}Mn_{1-x3-y3}O₂, where 0.8≤x3≤0.95, 0.03≤y3≤0.1, and 0<x3+y3<1.

3. The positive electrode plate according to claim 2, wherein:
a volume average particle size Dv50 of the material A ranges from 1 µm to 6 µm; and/or
a BET specific surface area of the material A ranges from 0.5 m²/g to 1.5 m²/g.

4. The positive electrode plate according to claim 2 or 3, wherein:
a volume average particle size Dv50 of the material B ranges from 1 µm to 5 µm; and/or
a BET specific surface area of the material B ranges from 0.5 m²/g to 1.5 m²/g.

5. The positive electrode plate according to any one of claims 2 to 4, wherein:
a volume average particle size Dv50 of the material C ranges from 7 µm to 18 µm; and/or
a BET specific surface area of the material C ranges from 0.2 m²/g to 1 m²/g.

6. The positive electrode plate according to any one of claims 1 to 5, wherein the second positive electrode active material comprises at least one of a lithium-rich manganese-based material or lithium manganese iron phosphate, wherein:
the lithium-rich manganese-based material is represented by a chemical formula of aLi₂MnO₃·(1-a)LiNiₓ₄Co_{y4}Mn_{1-x4-y4}O₂, where 0≤a≤1, 0.2≤x4≤1, 0≤y4≤0.5, and 0<x4+y4<1; and
the lithium manganese iron phosphate is represented by a chemical formula of LiMnₓ₅Fe₁₋ₓ₅PO₄, where 0.2≤x5≤0.8.

7. The positive electrode plate according to claim 6, wherein the first positive electrode active material comprises material A, and wherein the second positive electrode active material comprises the lithium-rich manganese-based material.

8. The positive electrode plate according to claim 6, wherein the first positive electrode active material comprises at least one of material B or material C, and wherein the second positive electrode active material comprises lithium manganese iron phosphate.

9. The positive electrode plate according to claim 6, wherein:
a volume average particle size Dv50 of the lithium-rich manganese-based material ranges from 10 µm to 20 µm; and/or
a BET specific surface area of the lithium-rich manganese-based material ranges from 0.2 m²/g to 1 m²/g.

10. The positive electrode plate according to claim 6, wherein:
a volume average particle size Dv50 of the lithium manganese iron phosphate ranges from 0.2 µm to 1.5 µm; and/or
a BET specific surface area of the lithium manganese iron phosphate ranges from 10 m²/g to 30 m²/g.

11. A method for preparing the positive electrode plate according to any one of claims 1 to 10, the method comprising:
forming a first positive electrode active material layer comprising a first positive electrode active material on at least one side of a current collector; and
forming a second positive electrode active material layer comprising a second positive electrode active material on a side of the first positive electrode active material layer away from the current collector, to obtain the positive electrode plate.

12. A battery, comprising the positive electrode plate according to any one of claims 1 to 10 or the positive electrode plate prepared by the method according to claim 11.

13. A vehicle, comprising the battery according to claim 12.
